# EUROPÄISCHE PATENTANMELDUNG

(11) **EP 1 714 875 A2**
(43) Veröffentlichungstag der Anmeldung: **25.10.2006**
(21) Anmeldenummer: 06112788.2
(22) Anmeldetag: 20.04.2006
(51) Int. Cl.: B65B 9/04, B65B 51/22, B65B 3/02, B65B 47/00

(54) **Stanz- und Siegelverfahren**

(30) Priorität: 20.04.2005 DE 102005018371; 22.08.2005 DE 102005039690
(71) Anmelder: Gerhard Schubert GmbH, 74564 Crailsheim (DE)
(72) Erfinder: Schubert, Gerhard, 74564, Crailsheim (DE)
(74) Vertreter: Vogeser, Werner

(57) **Zusammenfassung**

Die Erfindung betrifft das Aufsiegeln einer Siegelfolie (20) auf einem siegelfähigen Behälter (15) sowie das Herauslösen des Behälters (15) aus einer Folienbahn mit Hilfe von Stanzen sowie ein Verfahren zum Verschließen solcher napfartiger Behälter durch Aufbringen einer Siegelfolie und/oder zum Heraustrennen der Behälter aus dem umgebenden Material, und auch eine hierfür verwendbare Vorrichtung, die schnell, einfach und kostengünstig arbeitet bzw. gestaltet sind. Das Verschließen von napfartigen Behältern (15) geschieht durch insbesondere abdichtendes Aufbringen einer Siegelfolie (20) sowie Heraustrennen der Behälter (15) aus dem umgebenden Material der Behälterbahn (25), wobei das Verschließen der Behälter (15) durch Aufsiegeln der Siegelfolie (20) sowie das Herauslösen der Behälter aus der Behälterbahn (25) bei laufender Behälterbahn (20) erfolgt.

## Beschreibung

### I. Anwendungsgebiet

Die Erfindung betrifft das Aufsiegeln einer Siegelfolie auf einem siegelfähigen Behälter sowie das Herauslösen des Behälters aus einer Folienbahn mit Hilfe von Stanzen.

### II. Technischer Hintergrund

Mit Produkten gefüllte siegelfähige Behälter, die beispielsweise aus einem thermoplastischen Kunststoff bestehen oder durch andere Maßnahmen siegelfähig gestaltet wurden, werden häufig verschlossen durch Aufbringen einer heißsiegelfähigen Siegelfolie, wobei das Heißsiegeln mittels eines heißen Stempels oder auch mittels Ultraschall erfolgen kann.

Weiterhin werden napfförmige Behälter aus Kunststoff häufig durch Tiefziehen, insbesondere durch Thermoformen, aus einer ursprünglich ebenen, umformbaren Kunststofffolie hergestellt und müssen anschließend zum Vereinzeln der Behälter aus dieser umgebenden Folienbahn herausgelöst werden, was in der Regel unter Zuhilfenahme eines Stanzprozesses erfolgt.

Je nach Reihenfolge und Art der Durchführung dieser Prozesse ist der Zeitaufwand für diese Bearbeitungsschritte unterschiedlich hoch und der konstruktive Aufwand für die entsprechenden Maschinen sowie deren Platzbedarf unterschiedlich hoch.

### III. Darstellung der Erfindung

### a) Technische Aufgabe

Es ist daher die Aufgabe gemäß der Erfindung, ein Verfahren zum Verschließen solcher napfartiger Behälter durch Aufbringen einer Siegelfolie und/oder zum Heraustrennen der Behälter aus dem umgebenden Material zu schaffen, und auch eine hierfür verwendbare Vorrichtung, die schnell, einfach und kostengünstig arbeitet bzw. gestaltet sind.

### b) Lösung der Aufgabe

Diese Aufgabe wird durch die Ansprüche 1 und XX gelöst. Vorteilhafte Ausführungsformen ergeben sich aus den Unteransprüchen.

Indem sowohl das Siegeln, also Verschließen der Behälter mittels Aufsiegeln der Siegelfolie, als auch das Herauslösen der Behälter aus der Behälterbahn bei laufender Behälterbahn geschehen, werden Nachteile durch Abstoppen und neues Anlaufen der Behälterbahn - wie etwa Überlaufen der Behälter, ungenaue Positionierung der Behälter, das Verrutschen der Produkte durch Stopp and go, höhere Belastung aller beteiligten bewegten Komponenten usw. - vermieden, und vor allem die dann notwendigen Puffer zwischen den beiden Arbeitsschritten vermieden.

Indem der Stanzvorgang, der für das Herauslösen der Behälter benötigt wird, zusammen mit dem Aufsiegeln der Siegelfolie und insbesondere mittels der gleichen Werkzeuge durchgeführt wird, wird hierfür gemeinsam nur eine einzige Arbeitsstation und nur ein einziger Werkzeugsatz benötigt.

Dies ist besonders einfach lösbar, wenn das Siegeln mittels Ultraschall geschieht, bei dem ja eine mittels Ultraschall beaufschlagte Sonotrode von der einen Seite die gegeneinander zu siegelnden Teile, also Siegelfolie und Behälter, gegen einen Anschlag, den sog. Amboss, pressen, da dann Sonotrode bzw. Amboss selbst nur eine geringe Temperatur besitzen und die Stanzkante zum Ausstanzen direkt an einem der beiden Teile ausgebildet ist.

Vorzugsweise ist dabei die Sonotrode mit einer ebenen, nicht an die jeweiligen herzustellenden Behälter spezifizierten, Kontaktfläche ausgebildet, während der Amboss produktspezifisch ausgebildet ist und je nach Art und Form der zu siegelnden Behälter ausgetauscht werden muss.

Vorzugsweise sind deshalb sowohl die Stanzkante und/oder auch die in Form von Erhebungen ausgebildeten Konzentratoren zur Bündelung der Ultraschallenergie an dem produktspezifischen Amboss ausgebildet.

Das Siegeln und/oder Stanzen an der laufenden Folienbahn wird in einer besonders einfachen Ausführungsform dadurch erreicht, dass die quer zur Durchlaufrichtung der Folie gegeneinander bewegbaren Werkzeughälften, also z.B. Sonotrode und Amboss, die die z. B. kombinierte Siegel-/Stanzeinheit bilden, zusammen mit dem diese Gegeneinanderbewegung bewirkenden Pressantrieb an einem Wagen aufgehängt sind, welcher am Maschinengestell in Durchlaufrichtung an entsprechenden Führungen verfahrbar ist und synchron mit der Folienbahn mitbewegt werden kann während des Siegel-/Stanzvorganges.

Nach dem Abheben von den Behältern erfolgt eine Zurückbewegung der Werkzeuge entgegen der Durchlaufrichtung der Behälterbahn für den nächsten Siegelzyklus.

Um eine definierte maximale Annäherung der Sonotrode gegen den Amboss zu erreichen, werden beide bis zu einem fest montierten, mechanischen Anschlag gegeneinander bewegt, von denen der eine an dem die Sonotrode halternden Sonotrodenrahmen und der andere an der den auswechselbaren Amboss tragenden Ambossplatte befestigt ist.

Da das Eindringen der Stanzkante in den Kunststoff mittels der Ultraschallschwingung unterstützt wird, und nicht nur durch mechanische Presskraft bewirkt wird, ergibt dies eine sehr saubere, aufgeschmolzene Stanzkante, insbesondere wenn die Schwingungsrichtung der Ultraschallschwingung übereinstimmend mit der Stanzrichtung gewählt wird.

Vor allem wenn dabei nicht durchgestanzt, sondern nur angestanzt werden soll, kann das Verbleiben der Restdicke von ca. 1/100 Millimeter zuverlässig durch den vorerwähnten mechanischen Anschlag erreicht werden, der unabhängig von Schwankungen der Materialdicke des zu stanzenden Kunststoffes etc. funktioniert.

Bei der vorzugsweise als Oberwerkzeug angeordneten Sonotrode erstrecken sich die Ultraschallantriebe, bestehend aus Konverter und Booster, von der Rückseite der Sonotrode weg und durch entsprechende Durchbrüche in dem die Sonotrode tragenden Sonotrodenrahmen hindurch. Konverter und Booster sind dabei so dimensioniert, dass die in die Sonotrode eingeleitete Ultraschallwelle an der Kontaktfläche der Sonotrode zum Werkstück hin einen Wellenbauch bildet.

Eine annähernd beliebig große Sonotrodenfläche wird erreicht, indem die Gesamtsonotrode aus mehreren, insbesondere streifenförmig hintereinander in Durchlaufrichtung aneinandergrenzenden einzelnen Sonotroden zusammengesetzt ist, die jeweils einzeln und insbesondere unabhängig voneinander mittels Ultraschallantrieben, in der Regel zwei beabstandeten Ultraschallantrieben nebeneinander, mit Ultraschall beaufschlagt werden und unabhängig voneinander mittels jeweils eigenen Aufhängungen an dem alle Sonotroden gemeinsam tragenden Sonotrodenrahmen aufgehängt sind, gegenüber dem die Sonotroden ja schwingen können müssen.

Der benötigte Anpressdruck für das Siegeln und Stanzen wird dabei mittels einer Pneumatikeinheit aufgebracht, die auf pneumatischen Wege einen hohen Pressdruck über allerdings nur einen geringen Pressweg aufbringen kann, und Teil eines Pressantriebes ist, der darüber hinaus einen Eilgang-Antrieb umfasst, um Obertisch und Untertisch, also das darauf befestigte Oberwerkzeug und Unterwerkzeug über große Distanzen und mit geringem oder ohne Pressdruck gegeneinander anzunähern bzw. voneinander zu entfernen.

Oberwerkzeug und Unterwerkzeug werden dabei vorzugsweise mittels zweier quer zur Durchlaufrichtung beabstandeter Pressantriebe, die synchron betrieben werden, relativ zueinander bewegt, wobei ein Verkanten durch Kippen quer zu dieser ersten Querrichtung vermieden wird, indem in Durchlaufrichtung zueinander versetzt in Stanzrichtung verlaufende Pressenführungen, insbesondere vier im Viereck angeordnete Pressenführungen, zum Obertisch gegenüber dem Untertisch führen.

Der konstruktive Aufwand und auch das Synchronisierungsproblem bei nur zwei Pressantrieben gegenüber vier Pressantrieben wird dadurch gering gehalten, und dennoch wird eine bezüglich des dazwischen angeordneten Werkzeuges symmetrische Anordnung der Antriebe erzielt.

Vor allem wenn das Heraustrennen der Behälter mittels eines nicht vollständigen Durchstanzens, sondern nur Anstanzens und anschließendes Herauslösen der Behälter durch Wegbiegen der umgebenden Restfolie um einen kleinen Biegeradius erfolgt, ist für das Erzielen einer sauberen Außenkante der herausgelösten Behälter die Beibehaltung einer durchgängig gleich dicken Restdicke nach dem Anstanzen Voraussetzung.

Um dies zu erreichen, wird beim Siegeln und Stanzen die Sonotrode bzw. der Amboss so groß gewählt und in der Aufsicht betrachtet die Behälter so der Sonotrode bzw. dem Amboss zugeordnet, dass sich die Behälter, insbesondere mehrere Behälter gleichzeitig, immer vollständig innerhalb des Außenumfanges des Ambosses und/oder der Sonotrode befinden, also bei einem einzelnen Stanzvorgang der gesamte Umfang eines Behälters auf einmal gestanzt wird.

Falls das Herauslösen in bestimmten Anwendungsfällen durch ein vollständiges Durchstanzen des Materials erreicht werden soll, wird die Stanzkante an demjenigen Werkzeug ausgebildet, welches sich auf der Seite der napfartigen Vertiefungen des Behälters befindet, und auf der gegenüberliegenden Seite, also auf der von dem Behälter abgewandten Seite der Siegelfolie, eine zusätzliche Schutzfolie zugeführt und mit der Siegelfolie mitgeführt, ohne mit dieser verbunden zu sein.

Die Zusatzdicke der Schutzfolie dient dazu, trotz Durchstanzen von Behälterfolien und Siegelfolie die Stanzkante in die Schutzfolie nur eindringen zu lassen und dadurch trotz vollständigen Durchstanzen des Behälters zuverlässig einen Kontakt zwischen Stanzkante und dem Gegenwerkzeug, insbesondere der Sonotrode, zu vermeiden. Dementsprechend muss die Schutzfolie eine Dicke aufweisen, die mindestens der Schwingungsamplitude der aufgebrachten Ultraschallschwingung in Stanzrichtung entspricht.

Am Amboss sind neben der Stanzkante - und zwar bezüglich des Behälters radial nach innen versetzt - weiterhin ein oder mehrere Konzentratoren, so gennante E-nergierichtungsgeber, in Form von ebenso wie die Stanzkante aufragender Erhebungen angeordnet, die jedoch weniger hoch sind. Bei den Konzentratoren kann es sich um einen einzigen, wie die Stanzkante ringförmig um den Behälter umlaufender, linienförmigen Wulst handeln oder um eine Vielzahl einzelner, entlang der gewünschten Siegellinie zueinander beabstandeter, z. B. kegelstumpfförmiger Erhebungen.

Dabei kommt es auf die Ausbildung einer definierten Kontaktfläche am freien Ende, beispielsweise der Oberseite der kegelstumpfförmigen Erhebungen, an, die eine definierte Kontaktfläche zwischen diesem Konzentrator und dem dadurch an die Sonotrode angepressten Kunststoff vorgeben, innerhalb dessen der Anpressdruck und die Haltezeit - die insbesondere eine nach Beendigung der Ultraschallschwingung durchgeführte Abkühlphase ist, weshalb der Amboss auch gekühlt sein kann - erlaubt.

### c) Ausführungsbeispiele

Ausführungsformen gemäß der Erfindung sind im Folgenden beispielhaft näher beschrieben. Es zeigen:
- Fig. 1:: ein Prinzipbild der Stanz- und Siegeleinheit in der Seitenansicht und teilweise in der Aufsicht;
- Fig. 2:: die Stanz- und Siegelstation betrachtet in Durchlaufrichtung;
- Fig. 3:: die Sonotroden in der Aufsicht;
- Fig. 4:: die Stanz- und Siegelstation in der perspektivischen Ansicht und
- Fig. 5:: den Untertisch in Einzelteilen.

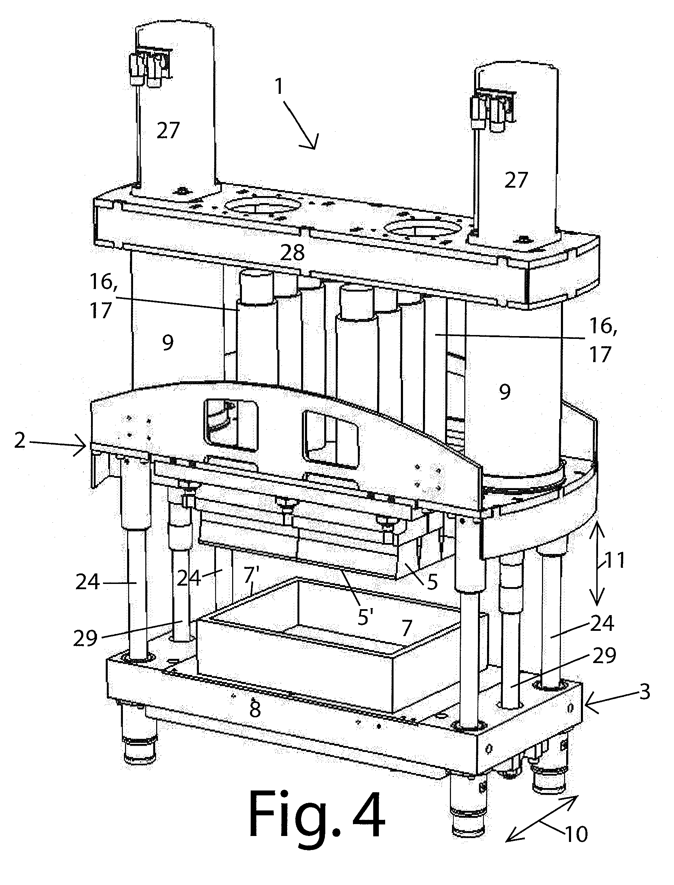

Fig. 4 zeigt in einer perspektivischen Ansicht die wichtigsten Elemente der Stanz- und Siegeleinheit 1 im geöffneten Zustand, und zwar aus Übersichtlichkeitsgründen ohne zu siegelnde Behälterbahnen dazwischen.

Die Siegeleinheit 1 umfasst einen Obertisch 2, an dessen Unterseite die Sonotrode 5 befestigt ist sowie einen im Abstand darunter angeordneten Untertisch 3, auf dessen Ambossplatte 8 der an das zu siegelnde Produkt angepasste Amboss 7 sitzt, dessen nach oben aufragende Stege 7' mit ihren Oberseiten zum Siegeln die nicht dargestellten, dazwischen angeordneten Produkte nach oben gegen die Kontaktfläche 5' der Sonotrode 5 pressen. Dabei schwingt im zusammengepressten Zustand die Sonotrode kurze Zeit mit Ultraschallschwingungen in der Annäherungsrichtung, also der Stanzrichtung 11, von Obertisch und Untertisch, und presst danach ohne Ultraschallschwingung beide gegeneinander zum Abkühlen und Stabilisieren der Ultraschallverschweißung zwischen den beiden verschweißten Elementen.

Um ein Verkanten des Untertisches 3 gegenüber dem Obertisch 2 zu vermeiden, ist der Untertisch 3 durch vier im Viereck angeordnete, als Stangenführungen ausgebildete Pressenführungen 24 geführt.

Der Antrieb für die Bewegung des Untertisches 3 relativ zum Obertisch 2 erfolgt durch zwei Pressantriebe 9, die als jeweils ein von der Oberseite des Obertisches 2 nach oben aufragender Zylinder von diesem im linken und rechten Seitenbereich aufragen, und an ihrem hinteren Ende über eine oberhalb des Obertisches 2 ebenfalls quer verlaufende Brücke 28 gegeneinander stabilisiert sind.

Auf der Oberseite der Brücke 28 sitzt jeweils ein Servomotor 27, der mit dem darunter befindlichen Pressantrieb 9 wirkverbunden ist, und die im Pressantrieb 9 geführte Gewindespindel 29, die aus der Unterseite des Obertisches 2 vorsteht und mit ihrem unteren Ende längsfest, aber drehbar, mit dem Untertisch 3, nämlich dessen Ambossplatte 8 verbunden ist, in Stanzrichtung bewegt.

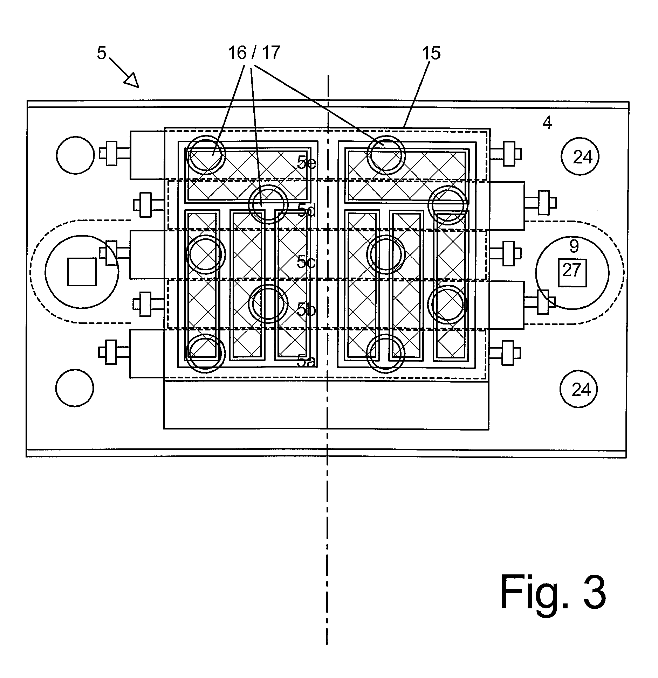

Wie die Aufsicht auf die Gesamtsonotrode 5 der Fig. 3 zeigt, besteht diese aus einzelnen streifenförmigen Sonotroden 5a,b, die jeweils separat von einem Paar von beabstandeten Ultraschallantrieben, die jeweils einen Booster 16 und einen Konverter 17 umfassen, angetrieben werden, und die in Fig. 4 sichtbar sind.

Fig. 3 zeigt auch, dass sich die Umrisse eines oder mehrerer Behälter 15 jeweils vollständig innerhalb des Umfanges der Sonotrode 5 befinden.

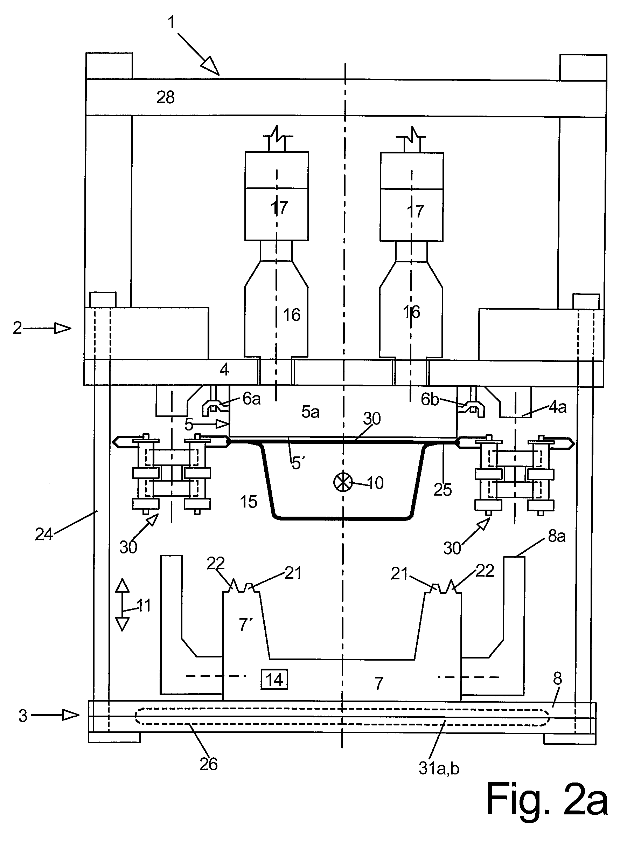

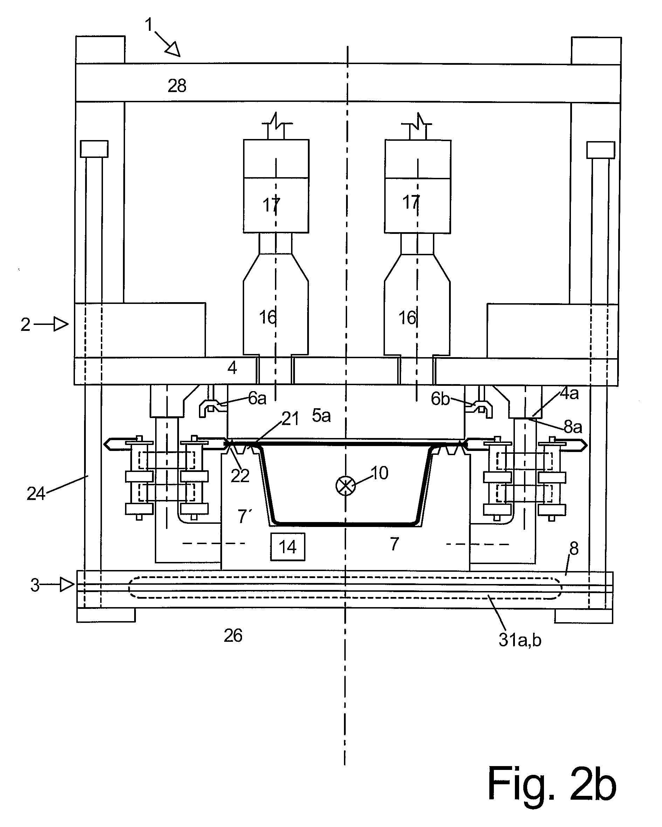

Die Figuren 2a und b zeigen die Siegeleinheit 1 betrachtet in Durchlaufrichtung mit gegeneinander angenähertem und voneinander beabstandetem Obertisch 2 und Untertisch 3, jedoch aus Übersichtlichkeitsgründen ohne die Pressantriebe.

Dabei ist zu erkennen, dass sich die ebenfalls etwa zylindrischen Ultraschallantriebe für die Sonotroden 5a... von deren Rückseite aus nach oben und durch entsprechende Aussparungen in dem Sonotrodenrahmen 4 erstrecken, an dem alle Sonotroden 5a... aufgehängt sind über seitliche Sonotrodenaufhängungen 6a,b, die das Schwingen der Sonotroden 5a... gegenüber diesem festen Sonotrodenrahmen 4 erst ermöglichen.

Die Fig. 2 zeigen ferner die den linken und rechten Randbereich der Behälterbahn 25 haltenden und in Durchlaufrichtung 10 weitertransportierenden Folien-Transportvorrichtung 30, die aus jeweils einer neben der Behälterbahn 25 umlaufenden Hohlbolzen-Kette bestehen, deren Glieder aufrecht stehen und von deren Gliedern oben jeweils nach radial außen ein Greiferpaar gegeneinander vorgespannt abragt.

Bei dem der Behälterbahn zugewandten Arbeitstrum halten die Greifer zwischen sich den jeweiligen Randbereich der Behälterbahn 25, so dass diese mit der angetriebenen Kette mitläuft.

Fig. 2a zeigt ferner auf der gegen die Sonotrode 5 gewandten Oberseite der Stege 7' des Ambosses 7 die bezüglich der Behältermitte außen aufragende Stanzkante 22, die um den auszustanzenden Behälter 15 geschlossen umläuft und im geschlossenen Zustand der Siegeleinheit 1 gemäß Fig. 2b in die Behälterbahn 25 eindringt und diese annähernd durchstößt, jedoch nicht vollständig durch die Behälterbahn 25 und die darüber befindliche Siegelfolie 30 durch dringt, um eine Berührung mit der Sonotrode 5 zu vermeiden.

Um die gewünschte definierte Restdicke an Folienmaterial beim Ausstanzen zu gewährleisten, ist am Sonotrodenrahmen 4 ein Sonotrodenanschlag 4a und am Amboss 7 ein Ambossanschlag 8a, der auch an der Ambossplatte 8 angeordnet sein könnte, angeordnet.

Im geschlossenen Zustand liegen die Anschläge 4a und 8a, die beidseits des Werkzeugs angeordnet sind, gegeneinander an, so dass die gewünschte geringe Restdicke an Folie an der Stanzstelle von z.B. 1/100 mm zuverlässig eingehalten wird.

Gleichzeitig mit diesem Ausstanzen findet mittels des gleichen Werkzeuges, also dem Amboss 7, das Ultraschallsiegeln statt.

Die bezüglich der Behälter 15 innerhalb der Stanzkante 22 angeordneten Konzentratoren 21 bieten mit ihrer Oberseite 21 a eine definierte Pressfläche gegen die Folienbahnen 25, 30 und damit indirekt gegen die Sonotrode 5, was ein besonders gut steuerbares und zuverlässiges Siegelergebnis ergibt.

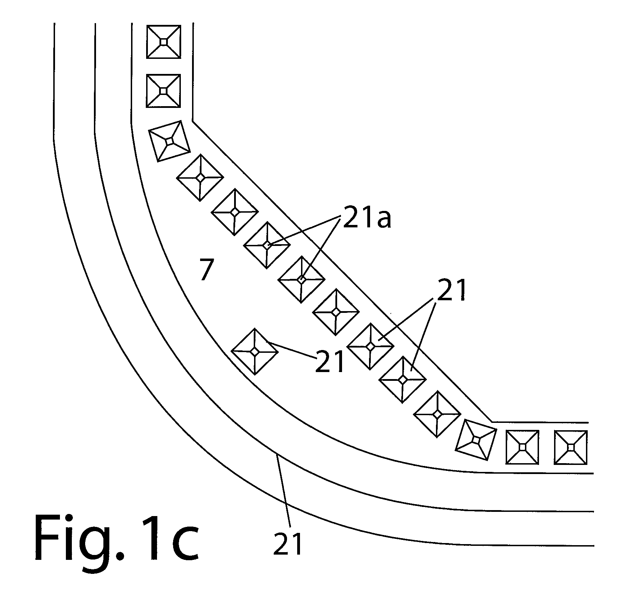

Die Konzentratoren 21 sind - wie am besten Fig. 1c in der Aufsicht zeigt - entlang der gewünschten Siegellinie in einem definierten Abstand zueinander angeordnet, der so gering ist, dass die durch die Kontaktflächen 21 a primär bewirkten Aufschmelzungen der einzelnen Konzentratoren 21 ineinander übergehen und eine durchgehend dichte Siegellinie ergeben.

Ist eine dichte durchgehende Siegellinie nicht erwünscht, sondern nur ein loses Anheften der Folien 25, 30 punktuell mit Abstand nebeneinander, so wird der Abstand der Konzentratoren 21 auf dem Amboss 7 vergrößert, wie in Fig. 1c und im Bereich der Ecke dargestellt, indem die Siegelfolie 20 später in der Benutzung leicht von dem Behälter 15 anhebbar und ergreifbar sein soll.

Der Großteil des Pressenhubes, also die Überwindung des Vertikalweges zwischen den Zuständen der Fig. 2a und 2b, erfolgt mittels der Pressantriebe 9, die in der angenäherten Position stoppen und den Obertisch 2 gegenüber dem Untertisch 3 verriegeln.

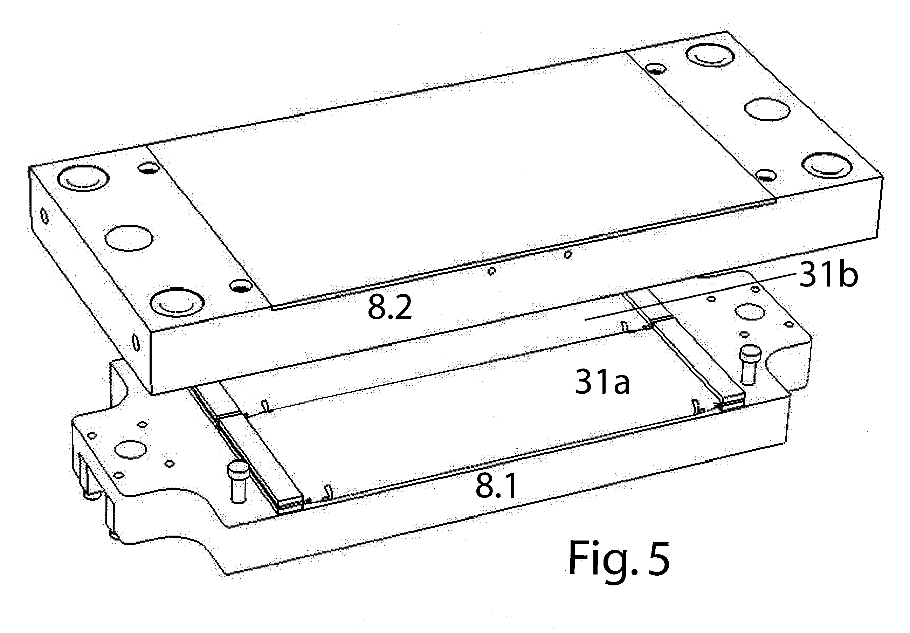

Von diesem Zustand aus wird dann der für das Stanzen notwendige hohe Pressdruck nicht mittels dieser Pressantriebe 9 aufgebracht, sondern mittels einer zusätzlichen Pneumatikeinheit 26, die in Fig. 2 im Untertisch 3 dargestellt ist und im Detail in Fig. 5 zu sehen ist:

Fig. 5 zeigt die zweiteilig ausgebildete Ambossplatte 8, die aus einem Grundkörper 8.1 und einer darauf aufliegenden Oberplatte 8.2 besteht, wobei der untere Grundkörper 8.1 mit der Gewindespindel 29 und damit den Pressantrieben 9 verbunden ist. Nach Blockieren von Obertisch 2 und Untertisch 3 gegeneinander wird der Pressdruck aufgebracht und der restliche, geringe Pressweg überwunden, indem zwischen Grundkörper 8.1 und Oberplatte 8.2 flächig liegende, in ihrem Inneren mit Druckluft beaufschlagbare Druckluftkissen 31a,b mit Druckluft beaufschlagt werden und sich damit in der Höhe ausdehnen und die Oberplatte 8.2 vom Grundkörper 8.1 um einen geringen Pressweg anheben, allerdings mit sehr hoher Presskraft.

Die Druckluftkissen 31 a,b sind in Querrichtung zur Durchlaufrichtung 10 verlaufende Schläuche, die an ihren Enden dicht verschlossen sind durch z.B. Klemmleisten, bis auf den notwendigen Druckluftanschluss.

Wie Fig. 2a,b zeigen, sind diese Druckluftkissen 31a,b, von denen in Durchlaufrichtung hintereinander mehrere angeordnet sein können, in entsprechenden Ausnehmungen der Oberseite des Grundkörpers 8.1 und/oder der Unterseite der Oberplatte 8.2 formschlüssig aufgenommen.

Fig. 2a zeigt ferner eine maschinenlesbare Codierung 14 am Amboss 7, welche von entsprechenden Sensoren der Maschine automatisch beim Einsetzen dieses Werkzeuges in die Siegeleinheit 1 gelesen wird und das Laden der zu diesem Werkzeug gehörenden Programme in der Maschinensteuerung bewirkt.

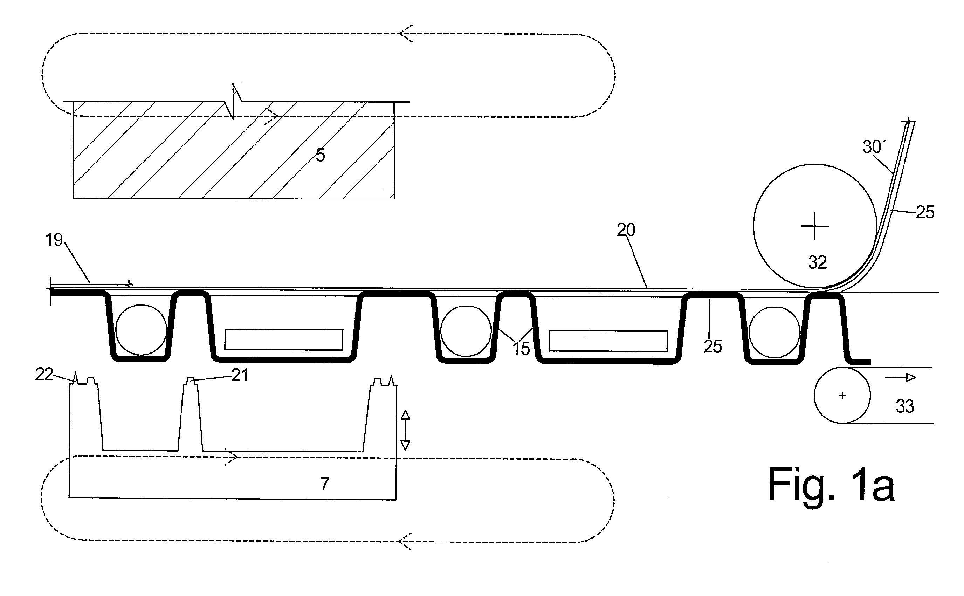

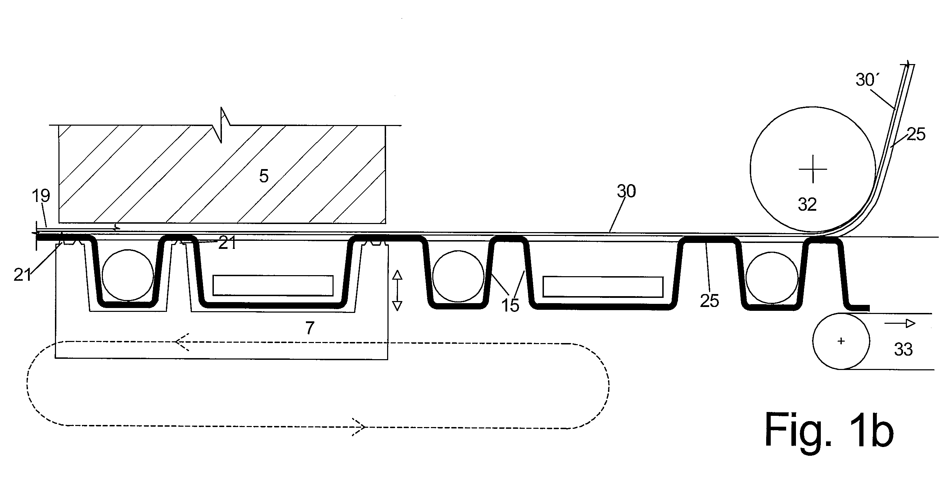

Fig. 1 zeigt ferner in Prinzipdarstellung in der Seitenansicht, dass der gesamte Stanz- und Siegelvorgang bei in Durchlaufrichtung 10 sich bewegender Behälterbahn 25 erfolgt, weshalb während des Stanz- und Siegelvorganges die gegeneinander gepresste Sonotrode 5 und Amboss 7 mit der Behälterbahn 25 mitbewegt werden, und nach Beendigung des Stanz- und Siegelvorganges von dieser nach oben und unten abheben und in die Ausgangsposition zurückbewegt werden.

Zu diesem Zweck ist die gesamte in Fig. 2 und 4 dargestellte Siegeleinheit 1 an einem nicht dargestellten Wagen befestigt, insbesondere aufgehängt, der sich in und gegen die Durchlaufrichtung 10 entlang des Maschinengestells bewegen kann.

Fig. 1 zeigt auch, dass zusätzlich beim Siegeln auf die Oberseite der Siegelfolie 30 eine weitere Folie als Schutzfolie 19 aufgebracht und mitgeführt werden kann, falls gewünscht ist, die Behälterbahn 25 sowie die in die Behälter 15 verschließende Siegelfolie 30 vollständig zu durchstanzen.

In diesem Fall bietet die Dicke der Schutzfolie 19 den notwendigen zusätzlichen Abstand, um einen Kontakt der Stanzkanten 21 direkt mit der Sonotrode 5 zu vermeiden. Dies würde zum einen die Stanzkante 21 beschädigen, andererseits aber auch die vorzugsweise ebene Kontaktfläche 5' der Sonotrode 5, die vorzugsweise nicht werkstückspezifisch ausgebildet ist, sondern eben ist und unabhängig von der Form der zu siegelnden Behälter 15 und damit des Ambosses 7 durchgängig benutzt wird.

Fig. 1 zeigt am rechten Bildrand auch das Herauslösen der angestanzten Behälter 15, in dem die durch das Tiefziehen stabilisierten Behälter 15 von der umgebenden Restfolie 25' bzw. 30' getrennt werden, indem diese Restfolien über eine scharfe Biegekante, beispielsweise den relativ geringen Durchmesser einer Trennrolle 32, nach oben weggeführt wird.

Diese Biegung machen die Behälter 15 nicht mit und laufen geradeaus weiter unter Brechen der Restdicke der angestanzten Stanznut.

Die vereinzelten Behälter 15 werden dann auf einen Behälterförderer 33 aufgenommen und weiter transportiert.

### BEZUGSZEICHENLISTE

- 1: Siegeleinheit
- 2: Obertisch
- 3: Untertisch
- 4: Sonotrodenrahmen
- 4a: Sonotrodenanschlag
- 5: Gesamtsonotrode
- 5': Kontaktfläche
- 5a,b: Sonotrode
- 6a,b: Sonotrodenaufhängung
- 7: Amboss
- 7': Stege
- 8: Ambossplatte
- 8.1: Grundkörper
- 8.2: Oberplatte
- 8a: Ambossanschlag
- 9: Pressantrieb
- 10: Durchlaufrichtung
- 11: Stanzrichtung
- 12: Brücke
- 13: Wagen
- 14: Werkzeug-Code
- 15: Behälter
- 16: Booster
- 17: Konverter
- 18: Ambossheizung
- 19: Schutzfolie
- 20: Siegelfolie
- 21: Konzentrator
- 21 a: Kontaktflächen
- 22: Stanzkante
- 23: Gestell
- 24: Pressenführung
- 25: Behälterbahn
- 26: Pneumatikeinheit
- 27: Servomotor
- 28: Brücke
- 29: Gewindespindel
- 30: Folien-Transportvorrichtung
- 31a,b: Druckluftkissen
- 32: Trennrolle
- 33: Behälter-Förderer

## Patentansprüche

1. Verfahren zum Verschließen von napfartigen Behältern (15) durch insbesondere abdichtendes Aufbringen einer Siegelfolie (20) sowie Heraustrennen der Behälter (15) aus dem umgebenden Material der Behälterbahn (25),
**dadurch gekennzeichnet, dass**
das Verschließen der Behälter (15) durch Aufsiegeln der Siegelfolie (20) sowie das Herauslösen der Behälter (15) aus der Behälterbahn (25) bei laufender Behälterbahn (25) geschieht.

2. Verfahren zum Verschließen von napfartigen Behältern (15) durch insbesondere abdichtendes Aufbringen einer Siegelfolie (20) sowie Heraustrennen der Behälter (15) aus dem umgebenden Material der Behälterbahn (25),
**dadurch gekennzeichnet, dass**
das Herauslösen der Behälter (15) ein Ausstanzen oder Anstanzen der Behälter (15) umfasst und dieses Stanzen zusammen mit dem Aufsiegeln der Siegelfolie (20) im gleichen Arbeitsgang und insbesondere mittels des gleichen Werkzeuges (2, 3) erfolgt.

3. Verfahren nach einem der vorhergehenden Ansprüche,
**dadurch gekennzeichnet, dass**
- beim Siegeln und Stanzen der Behälter (15) die Behälterbahn (25) und die Siegelfolie (20) übereinander synchron herangeführt und zwischen einem Oberwerkzeug (2) und einem Unterwerkzeug (2) gegeneinander versiegelt werden, insbesondere mittels Ultraschall, und/oder insbesondere
- die das Werkzeug (2, 3) umfassende Siegeleinheit (1) einschließlich des die Werkzeuge (2, 3) gegeneinander bewegenden Pressantriebes (9) an einem Maschinengestell (23) aufgehängt sind und mittels eines in Durchlaufrichtung (10) verfahrbaren Wagens (13) während des Siegelns bzw. Stanzens mit den Folien (20, 25) mitbewegt und nach dem entgegen der Stanzrichtung (11) erfolgenden Abheben von den Behältern (15) wieder entgegen der Durchlaufrichtung (10) zurückbewegt werden, und/oder insbesondere
- das eine Werkzeug, insbesondere das Oberwerkzeug (2), die Gesamtsonotrode (5) ist und in Stanzrichtung (11) auch während des Siegel-/Stanzvorganges nicht bewegt wird und das andere Werkzeug, insbesondere Unterwerkzeug (3), den Amboss (7) umfasst, an dem die wenigstens eine Stanzkante (22) sowie Konzentratoren (21) ausgebildet sind.

4. Verfahren nach einem der vorhergehenden Ansprüche,
**dadurch gekennzeichnet, dass**
- beim Siegeln und Stanzen ein Sonotrodenanschlag (4a) gegen einen Ambossanschlag (8a) angelegt wird, und/oder insbesondere
- die Gesamtsonotrode (5) aus mehreren einzelnen, insbesondere streifenförmig nebeneinander angeordneten, Sonotroden (5a, b) besteht, und die einzelnen Sonotroden (5a, b) jeweils separat über jeweils insbesondere einen Booster (16) und einen Konverter (17) beaufschlagt wird, und/oder insbesondere
- die einzelnen Sonotroden (5a, b) jeweils separate Sonotrodenaufhängungen (6a, b) gegenüber dem Sonotrodenrahmen (4) besitzen.

5. Verfahren nach einem der vorhergehenden Ansprüche,
**dadurch gekennzeichnet, dass**
- die Schwingungsrichtung der Ultraschallschwingungen übereinstimmend mit der Stanzrichtung (11) gewählt wird, und/oder insbesondere
- Konverter (17) und Booster (16) so dimensioniert sind und am Oberwerkzeug (2) angeordnet sind, dass die dort eingeleitete Ultraschallwelle an der Kontaktfläche der Sonotrode (5) zum Behälter einen Wellenbauch bildet, und/oder insbesondere
- die Ultraschallenergie mittels einer Vielzahl hintereinander, insbesondere entlang der Siegellinie aufgereihter, Konzentratoren (21) mit von einander getrennten Kontaktflächen (21 a) in die Folien (20, 25) eingeleitet wird.

6. Verfahren nach einem der vorhergehenden Ansprüche,
**dadurch gekennzeichnet, dass**
- der Anpressdruck beim Siegeln und Stanzen mittels einer Pneumatikeinheit (26) aufgebracht wird, und/oder insbesondere
- Oberwerkzeug (2) und Unterwerkzeug (3) mittels zweier beabstandet zueinander angeordneter Pressantriebe (9) gegeneinander bewegt werden, deren in der Aufsicht betrachtete Verbindungslinie quer zur Durchlaufrichtung (10) liegt und insbesondere Oberwerkzeug (2) und Unterwerkzeug (3) mittels hierzu in und gegen die Durchlaufrichtung (10) dazu versetzen Pressenführungen (24) in Stanzrichtung (11) geführt werden, und/oder insbesondere
- die Ultraschallantriebe ausschließlich mit ihrem Konverter (17) an der Sonotrode (5a, b) angeordnet sind.

7. Verfahren nach einem der vorhergehenden Ansprüche,
**dadurch gekennzeichnet, dass**
- die Zuordnung der Behälter (15) zur Fläche der Sonotrode (5) während des Siegelns so gewählt wird, dass jeder Behälter (15) über seinen vollständigen Grundriss während eines einzigen Siegelvorganges gesiegelt wird, sich also in der Aufsicht betrachtet vollständig innerhalb des Umfanges der Sonotrode (5) befindet, und insbesondere sich mehrere Behälter (15) vollständig innerhalb des Umfanges der Sonotrode (5) befinden, und/oder insbesondere
- beim Einsetzen eines Werkzeuges (2, 3) die Maschine selbsttätig den am Werkzeug (2, 3) angebrachten Werkzeug-Code (14) liest und das entsprechende Stanz- und Siegelprogramm in der Steuerung der Maschine geladen wird, und/oder insbesondere
- im Falle des gewünschten Durchstanzens der Dichte der Behälterbahn (25) auf der von der Stanzkante (22), insbesondere dem Unterwerkzeug (3), abgewandten Seite zusätzlich zur Siegelfolie (20) und Behälterbahn (25) eine nicht mit diesen verbundene Schutzfolie (19) auf der Siegelfolie (20) zugeführt wird, um den Kontakt der Stanzkante (22) mit der Kontaktfläche (5') der Sonotrode (5) beim Durchstanzen von Siegelfolie (20) und Schutzfolie (19) zu vermeiden.

8. Siegel-/Stanzeinheit (1) zum dichten Verschließen von siegelfähigen, napfförmigen Behältern (15) durch dichtes Aufbringen einer Siegelfolie (20),
**dadurch gekennzeichnet, dass**
Oberwerkzeug (2) und Unterwerkzeug (3) sowohl das Siegelwerkzeug als auch das Stanzwerkzeug enthalten.

9. Siegel-/Stanzeinheit (1) nach einem der vorhergehenden Vorrichtungsansprüche,
**dadurch gekennzeichnet, dass**
- die Siegeleinheit (1) eine Ultraschalleinheit ist und eines der Werkzeuge, insbesondere das Oberwerkzeug (2), eine Gesamtsonotrode (5) mit ebener Kontaktfläche (5') ist und das andere Werkzeug, insbesondere das Unterwerkzeug (3), der dagegen pressende Amboss (7) mit einer Gestaltung passend zu den zu versiegelnden Behältern (15) ist, und davon aufragende Siegelstege (7'), die die einzelnen Behälter umschließen, aufweist, und/oder insbesondere
- auf den Ambossstegen (7') radial bezüglich dem Behälter (15) versetzt innen Erhebungen als Konzentratoren (21) für das Ultraschallsiegeln und im Abstand weiter außen umlaufend eine Stanzkante (22) angeordnet ist.

10. Siegel-/Stanzeinheit (1) nach einem der vorhergehenden Vorrichtungsansprüche,
**dadurch gekennzeichnet, dass**
- der Amboss (7) auswechselbar auf einer Ambossplatte (8) befestigt ist und die Gesamtsonotrode (5) auf einem sie tragenden Sonotrodenrahmen (4), wobei der Amboss (7) leicht und schnell austauschbar und positionierbar gegenüber der Ambossplatte (8) ausgebildet ist, und/oder insbesondere
- die Gesamtsonotrode (5) aus mehreren streifenförmig in Durchlaufrichtung (10) aneinander angrenzenden, einzeln mittels Ultraschall beaufschlagten Sonotroden (5a, b) besteht, die jeweils einzeln mittels Aufhängungen (6a, b) gegenüber dem Sonotrodenrahmen (4) aufgehängt sind.

11. Siegel/-Stanzeinheit (1) nach einem der vorhergehenden Vorrichtungsansprüche,
**dadurch gekennzeichnet, dass**
die Ultraschallantriebe bestehend aus Booster (16) und Konverter (17) jeweils nur mit dem Konverter (17) nur an der Sonotrode (5a, b) angeordnet sind und sich insbesondere durch den Sonotrodenrahmen (4) hindurch erstrecken.
